# EUROPEAN PATENT APPLICATION

(11) **EP 4 075 643 A1**
(43) Date of publication of application: **19.10.2022**
(21) Application number: 21744618.6
(22) Date of filing: 20.01.2021
(51) Int. Cl.: H02K 5/24, F16F 15/02, F16H 49/00, H02K 16/02, H02K 21/14

(54) **MAGNETIC GEARED ROTATING ELECTRICAL MACHINE**

(30) Priority: 24.01.2020 JP 2020009938
(71) Applicant: Mitsubishi Heavy Industries, Ltd., Tokyo 100-8332 (JP)
(72) Inventor: SHIMIZU, Takayuki, Tokyo 100-8332 (JP); OKABE, Ryoji, Tokyo 100-8332 (JP); HAYASHI, Kentaro, Tokyo 100-8332 (JP); MATSUSHITA, Takatoshi, Tokyo 100-8332 (JP); UMEDA, Akihiko, Tokyo 100-8332 (JP); SASAKI, Mikito, Tokyo 100-8332 (JP); SAKAI, Masayuki, Tokyo 100-8332 (JP)
(74) Representative: Studio Torta S.p.A.
(86) International application number: PCT/JP2021/001771
(87) International publication number: WO 2021/149699

(57) **Abstract**

A magnetic geared rotary electric machine includes: a stator which includes a stator core formed in an annular shape centered on an axis, a coil, and a plurality of stator magnets installed inside the stator core; a first rotor which includes a plurality of pole pieces; and a second rotor which includes a rotor core provided inside the first rotor and a plurality of rotor magnets provided in the rotor core, wherein the stator further includes an anti-vibration member that is made of fiber-reinforced plastic and is installed on an inner surface of the stator core.

## Description

### Technical Field

The present disclosure relates to a magnetic geared rotary electric machine.

Priority is claimed on Japanese Patent Application No. 2020-009938, filed January 24, 2020, the content of which is incorporated herein by reference.

### Background Art

Patent Document 1 (cited below) discloses a magnetic geared rotary electric machine in which a low-speed rotor (first rotor), a high-speed rotor (second rotor), and a stator are coaxially rotatable relative to each other.

When the magnetic geared rotary electric machine is used as, for example, a motor, the low-speed rotor which is an output shaft rotates at a predetermined reduction ratio due to a harmonic magnetic flux by rotating the high-speed rotor by an electromotive force of a coil provided in the stator.

### Citation List

### Patent Document(s)

Patent Document 1: Japanese Unexamined Patent Application, First Publication No. 2014-163431

### Summary of Invention

### Technical Problem

In the magnetic geared rotary electric machine, a magnetic force of a specific frequency is generated based on the number of poles Nₗ of the low-speed rotor, the number of pole pairs Nₕ of the high-speed rotor, and the number of pole pairs Nₛ of the stator. Among these, a low-frequency magnetic force of Nₗ - Nₛ contributes to driving the high-speed rotor. On the other hand, a high-frequency magnetic force of Nₗ + Nₛ does not contribute to driving the high-speed rotor, but rather causes vibration of the stator. The vibration of the stator may lead to noise and fatigue failure. Here, there is an increasing demand for a technique capable of suppressing the vibration of the stator.

The present disclosure has been made to solve the above-described problems and an object thereof is to provide a magnetic geared rotary electric machine that suppresses a vibration.

### Solution to Problem

In order to solve the above-described problems, a magnetic geared rotary electric machine according to the present disclosure includes: a stator which includes a stator core formed in an annular shape centered on an axis, a coil installed inside a slot of the stator core, and a plurality of stator magnets installed inside the stator core at intervals in a circumferential direction about the axis; a first rotor which includes a plurality of pole pieces provided inside the stator at intervals in the circumferential direction of the axis; and a second rotor which includes a rotor core provided inside the first rotor and a plurality of rotor magnets provided in the rotor core at intervals in the circumferential direction, wherein the stator further includes an anti-vibration member that is made of fiber-reinforced plastic and is installed on an inner surface of the stator core.

### Advantageous Effects of Invention

According to the present disclosure, it is possible to provide a magnetic geared rotary electric machine that suppresses a vibration.

### Brief Description of Drawings

FIG. 1 is a cross-sectional view showing a configuration of a magnetic geared rotary electric machine according to a first embodiment of the present disclosure.
FIG. 2 is a cross-sectional view taken along a line II-II of FIG. 1.
FIG. 3 is a diagram showing a modified example of an anti-vibration member according to the first embodiment of the present disclosure.
FIG. 4 is a diagram showing another modified example of the anti-vibration member according to the first embodiment of the present disclosure.
FIG. 5 is a main enlarged cross-sectional view of a magnetic geared rotary electric machine according to a second embodiment of the present disclosure.
FIG. 6 is a cross-sectional view of a magnetic geared rotary electric machine according to a third embodiment of the present disclosure.

### Description of Embodiments

### (First embodiment)

### (Configuration of magnetic geared rotary electric machine)

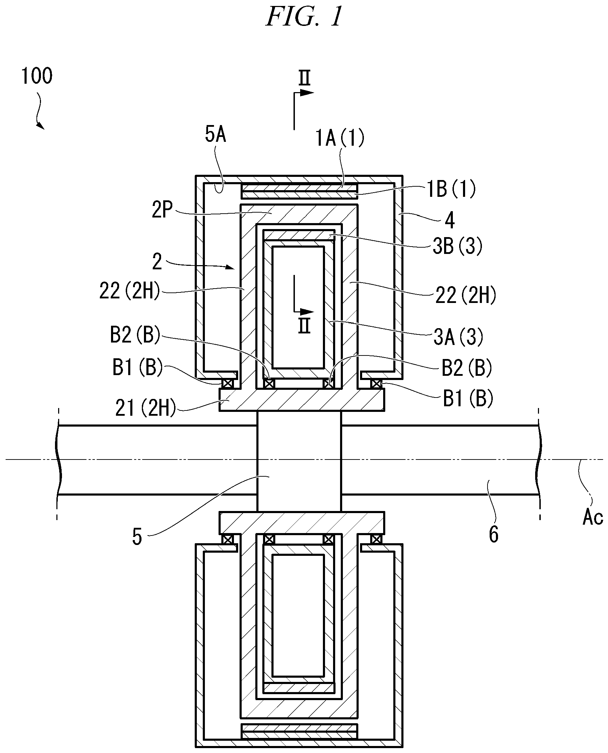

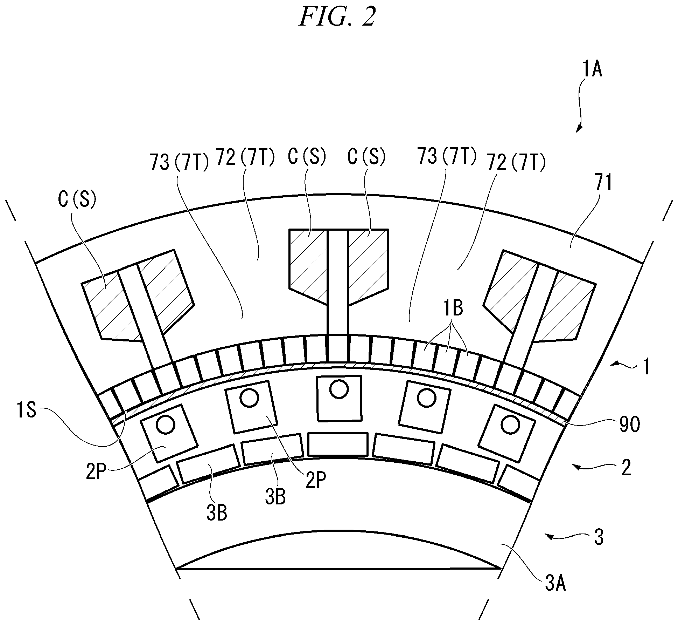

Hereinafter, a magnetic geared rotary electric machine 100 according to a first embodiment of the present disclosure will be described with reference to FIGs. 1 and 2. As shown in FIG. 1, the magnetic geared rotary electric machine 100 includes a stator 1, a first rotor 2, a second rotor 3, a casing 4, and a bearing B. The magnetic geared rotary electric machine 100 is attached to a rotating shaft 6 extending in a direction of an axis Ac. When electric power is supplied from the outside, the magnetic geared rotary electric machine functions as an electric motor by rotating the first rotor 2 and the second rotor 3 around the axis Ac. On the other hand, when a rotational force (torque) is applied to the rotating shaft 6 from the outside, the magnetic geared rotary electric machine functions as a generator by an induced electromotive force accompanying the rotation of the first rotor 2 and the second rotor 3.

### (Configurations of casing and stator)

The casing 4 is formed in annular shape centered on the axis Ac. A space is formed inside the casing 4. The stator 1 is provided on a surface (casing inner peripheral surface 5A) facing the inside of the radial direction with respect to the axis Ac in the inner surface of the casing 4.

As shown in FIG. 2, the stator 1 includes a stator core 1A, a plurality of coils C, a plurality of stator magnets 1B, and an anti-vibration member 90. The stator core 1A includes an annular back yoke 71 which is centered on the axis Ac and a plurality of teeth 7T which protrude radially inward from the back yoke 71 and are arranged at intervals in the circumferential direction. Each of the teeth 7T includes a tooth body 72 which is developed radially inward from the back yoke 71 and a tooth top end portion 73 which is integrally formed with the radial inner end portion of the tooth body 72. The tooth top end portion 73 projects toward both circumferential sides.

The plurality of coils C are attached to a plurality of tooth bodies 72. Each of the coil C is formed by winding a copper wire or the like around the tooth body 72. An area which is surrounded by the back yoke 71, the pair of adjacent tooth bodies 72, and the tooth top end portion 73 is a slot S for accommodating the coil C.

The plurality of stator magnets 1B are arranged on the inner peripheral surface of the stator core 1A, that is, the radially inner surface of the tooth top end portion 73 to be adjacent to each other in the circumferential direction. The stator magnet 1B is a permanent magnet such as a ferrite magnet or a neodymium magnet. The poles of the stator magnets 1B adjacent to each other are different. That is, the stator magnets 1B with different poles are arranged alternately in the circumferential direction. An inner peripheral surface defined by these stator magnets 1B is a cylindrical inner peripheral surface 1S as part of the inner surface of the stator core 1A.

The anti-vibration member 90 is attached to this cylindrical inner peripheral surface 1S. The anti-vibration member 90 is provided to attenuate the vibration generated in the stator core 1A. Specifically, as the anti-vibration member 90, a relatively flexible fiber-reinforced plastic containing an aramid resin or a vector resin is used. In addition, a glass fiber reinforced resin or a carbon fiber reinforced resin can be used as the anti-vibration member 90. Accordingly, the anti-vibration member 90 itself can absorb and attenuate the vibration of the stator core 1A. The anti-vibration member 90 has a cylindrical shape continuing along the cylindrical inner peripheral surface 1S.

### (Configuration of first rotor)

As shown in FIG. 1, the first rotor 2 is provided inside the stator 1. The first rotor 2 includes a disk portion 5, a first rotor body 2H, and a plurality of pole pieces 2P. The disk portion 5 is formed in a disk shape centered on the axis Ac and is attached to the rotating shaft 6. The first rotor body 2H is attached to the outer peripheral side of the disk portion 5. The first rotor body 2H includes a cylindrical portion 21 which has a cylindrical shape centered on the axis Ac and a pair of support portions 22 which projects radially outward from the outer peripheral surface of the cylindrical portion 21. The cylindrical portion 21 is supported on the inner peripheral surface of the casing 4 through the bearing B (outer bearing B1). The plurality of pole pieces 2P are provided at the radially outer end edges of the pair of support portions 22. The pole piece 2P is a magnetic material and generates a high frequency of magnetic flux by interaction with the magnetic force of the stator magnet 1B and the rotor magnet 3B described later. As shown in FIG. 2, the plurality of pole pieces 2P are provided at intervals in the circumferential direction.

### (Configuration of second rotor)

As shown in FIG. 1, the second rotor 3 is provided between the pair of support portions 22 of the first rotor body 2H. The second rotor 3 includes a rotor core 3A and a plurality of rotor magnets 3B. The rotor core 3A is formed in an annular shape centered on the axis Ac. The inner peripheral surface of the rotor core 3A is rotatably supported by the outer peripheral surface of the cylindrical portion 21 of the first rotor body 2H through the bearing B (inner bearing B2). As shown in FIG. 2, the plurality of rotor magnets 3B are arranged on the outer peripheral surface of the rotor core 3A in the circumferential direction. Each of the rotor magnet 3B faces the pole piece 2P from the inner peripheral side.

### (Operation and effect)

Next, an operation of the magnetic geared rotary electric machine 100 will be described. When the magnetic geared rotary electric machine 100 is used as an electric motor, electric power is first supplied to the coil C from the outside. Accordingly, the coil C is excited. Due to the magnetic force of the coil C, the second rotor 3 rotates around the axis Ac. Further, when the second rotor 3 rotates, the first rotor 2 rotates. The rotation speed of the first rotor 2 is decelerated under a reduction ratio based on the number of poles N₁ of the first rotor 2 and the number of pole pairs Nₕ of the second rotor 3. Specifically, the reduction ratio G is G=Nₗ/Nₕ.

On the other hand, when the magnetic geared rotary electric machine 100 is used as a generator, a rotational force (torque) around the axis Ac is applied to the rotating shaft 6. Accordingly, the first rotor 2 and the second rotor 3 rotate by the rotation of the rotating shaft 6. As the first rotor 2 and the second rotor 3 rotate, an induced electromotive force is generated in the coil C. By taking out this electric power to the outside, the magnetic geared rotary electric machine 100 can be used as a generator.

Incidentally, in the magnetic geared rotary electric machine 100, a magnetic force of a specific vibration is generated based on the number of poles Nₗ of the first rotor 2, the number of pole pairs Nₕ of the second rotor 3, and the number of pole pairs Nₛ of the stator 1. Among them, a low-frequency magnetic force of Nₗ-Nₛ contributes to driving of the second rotor 3. On the other hand, a high-frequency magnetic force of Nₗ+Nₛ does not contribute to driving the second rotor 3, but rather causes vibration of the stator 1. The vibration of the stator 1 may lead to noise and fatigue failure.

Here, in this embodiment, the anti-vibration member 90 is provided on the inner surface (cylindrical inner peripheral surface 1S) of the stator 1. According to this configuration, the anti-vibration member 90 can absorb and attenuate the vibration even when the stator 1 is vibrated. Particularly, since fiber-reinforced plastic is used as the anti-vibration member 90, it is possible to ensure durability as compared with other resin materials not containing fibers. Further, since the anti-vibration member 90 is made of fiber-reinforced plastic, it is also possible to suppress eddy current and heat generation unlike the case of using other metal materials. As a result, it is possible to more stably operate the magnetic geared rotary electric machine 100.

Further, according to the above-described configuration, the anti-vibration member 90 is provided on the cylindrical inner peripheral surface 1S defined by the stator magnet 1B. That is, the anti-vibration member 90 is provided on the entire circumferential area on the inner peripheral side of the stator 1. Accordingly, it is possible to stably absorb and attenuate the vibration of the stator 1 over the entire circumferential area.

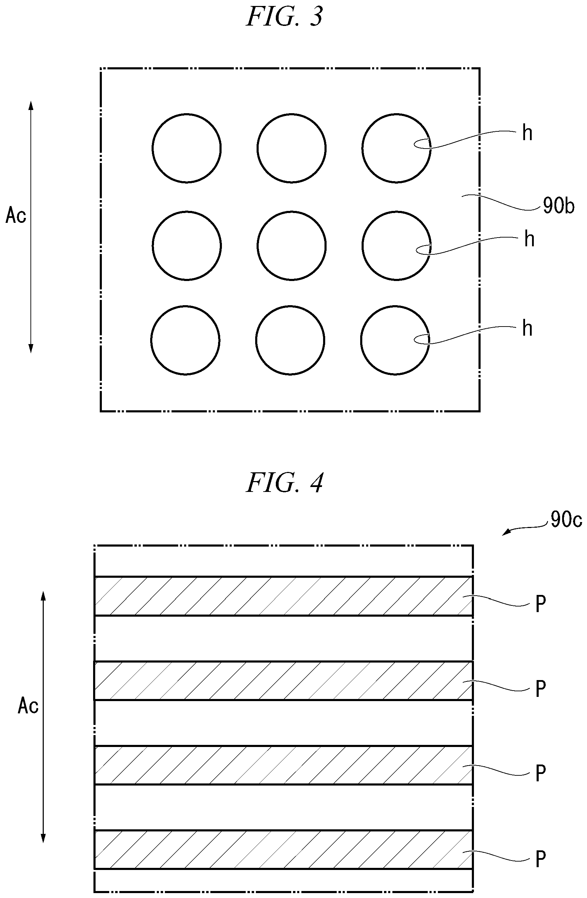

The first embodiment of the present disclosure has been described above. Additionally, various changes and modifications can be made to the above configuration as long as it does not deviate from the gist of this disclosure. For example, as shown in FIG. 3, it is also possible to form a plurality of hole portions h which penetrate the anti-vibration member 90b in the thickness direction (the radial direction with respect to the axis Ac) in the anti-vibration member 90b.

According to this configuration, it is possible to reduce the possibility that heat stays in the stator 1 through the hole portion h. As a result, it is possible to more stably operate the magnetic geared rotary electric machine 100.

Further, as shown in FIG. 4, it is also possible to configure the anti-vibration member 90c by a plurality of anti-vibration pieces P arranged at intervals in the direction of the axis Ac. Each anti-vibration piece P is formed in a cylindrical shape centered on the axis Ac. Additionally, it is also possible to configure each anti-vibration piece P by combining a plurality of arcuate members.

In this configuration, a gap is formed between the anti-vibration pieces P. Through this gap, the possibility that heat stays in the stator 1 can be reduced. As a result, it is possible to more stably operate the magnetic geared rotary electric machine 100.

### (Second embodiment)

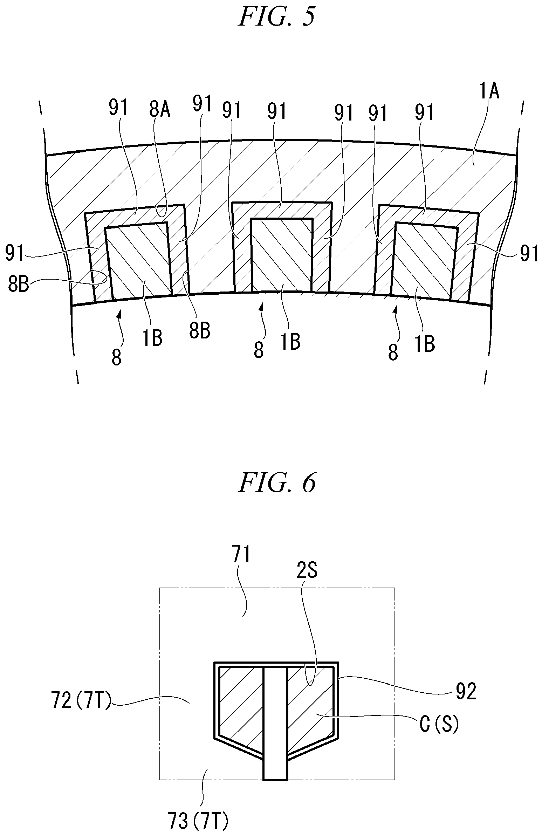

Next, a second embodiment of the present disclosure will be described with reference to FIG. 5. Additionally, the same reference numerals are given to the same configurations as those of the first embodiment, and detailed description thereof will be omitted. As shown in the same drawing, the inner peripheral surface of the stator core 1A is provided with a plurality of cavities 8, each of which is recessed radially outward and accommodates the stator magnet 1B. A surface facing the radial inside in the cavity 8 is formed as a bottom surface 8A and each of a pair of surfaces facing the circumferential direction is formed as a side surface 8B. The bottom surface 8A and the side surface 8B are part of the inner surface of the stator core 1A.

At least the bottom surface 8A is provided with a thin plate-shaped anti-vibration member 91. In this embodiment, the anti-vibration member 91 is also provided on the side surface 8B in addition to the bottom surface 8A. That is, the stator magnet 1B is surrounded by these anti-vibration members 91.

According to the above-described configuration, the anti-vibration member 91 can absorb and attenuate the vibration generated in the stator 1. Further, it is possible to ensure a large clearance between the stator 1 and the first rotor 2 as compared with a case in which the anti-vibration member is provided between the stator 1 and the first rotor 2. As a result, it is possible to more stably operate the magnetic geared rotary electric machine 100.

The second embodiment of the present disclosure has been described above. Additionally, various changes and modifications can be made to the above configuration as long as it does not deviate from the gist of this disclosure. For example, the anti-vibration member 91 described in the second embodiment and the anti-vibration member 90 described in the first embodiment can be used in combination.

### (Third embodiment)

Next, a third embodiment of the present disclosure will be described with reference to FIG. 6. Additionally, the same reference numerals are given to the same configurations as those of the above embodiments, and detailed description thereof will be omitted. As shown in the same drawing, in this embodiment, an anti-vibration member 92 is placed on a wall surface 2S of the slot S (described above) in the stator core 1A. Additionally, the wall surface 2S of the slot S is a surface formed by the inner peripheral surface of the back yoke 71 and the pair of adjacent teeth 7T (tooth bodies 72) and is a part of the inner surface of the stator core 1A. The anti-vibration member 92 is interposed between the coil C and the wall surface 2S.

According to the above-described configuration, since the wall surface 2S of the slot S is provided with the anti-vibration member 92, it is possible to absorb and attenuate the vibration generated in the stator 1. Further, since the anti-vibration member 92 is firmly pressed against the wall surface 2S by the coil C, it is possible to reduce the possibility that the anti-vibration member 92 may fall off.

The third embodiment of the present disclosure has been described above. Additionally, various changes and modifications can be made to the above configuration as long as it does not deviate from the gist of this disclosure. For example, at least one of the anti-vibration member 92 described in the third embodiment, the anti-vibration member 91 described in the second embodiment, and the anti-vibration member 90 described in the first embodiment can be used in combination.

### Appendix

The magnetic geared rotary electric machine 100 described in each embodiment can be summarized as follows, for example.
(1) The magnetic geared rotary electric machine 100 according to a first aspect includes: the stator 1 which includes the stator core 1A formed in an annular shape centered on the axis Ac, the coil C installed inside the slot S of the stator core 1A, and the plurality of stator magnets 1B installed inside the stator core 1A at intervals in the circumferential direction about the axis; the first rotor 2 which includes the plurality of pole pieces 2P provided inside the stator 1 at intervals in the circumferential direction of the axis Ac; and the second rotor 3 which includes the rotor core 3A provided inside the first rotor 2 and the plurality of rotor magnets 3B provided in the rotor core 3A at intervals in the circumferential direction, wherein the stator 1 further includes the anti-vibration member 90 that is made of fiber-reinforced plastic and is installed on the inner surface of the stator core 1A.

According to the above-described configuration, the anti-vibration member 90 can absorb and attenuate the vibration even when the stator 1 is vibrated. Particularly, since fiber-reinforced plastic is used as the anti-vibration member 90, it is possible to ensure durability as compared with other resin materials not containing fibers. Further, since the anti-vibration member 90 is made of fiber-reinforced plastic, it is also possible to suppress eddy current and heat generation.

(2) In the magnetic geared rotary electric machine 100 according to a second aspect, the stator core 1A includes the cylindrical inner peripheral surface 1S which is defined by the plurality of stator magnets 1B as the inner surface of the stator core, and the anti-vibration member 90 is placed on the cylindrical inner peripheral surface 1S.

According to the above-described configuration, the anti-vibration member 90 is provided on the cylindrical inner peripheral surface 1S defined by the stator magnet 1B. That is, the anti-vibration member 90 is provided in the entire circumferential area on the inner peripheral side of the stator 1. Accordingly, it is possible to stably absorb and attenuate the vibration of the stator 1 over the entire circumferential area.

(3) In the magnetic geared rotary electric machine 100 according to a third aspect, the anti-vibration member 90b is provided with the plurality of hole portions h penetrating the anti-vibration member 90b in the radial direction with respect to the axis.

According to the above-described configuration, the anti-vibration member 90b is provided with the plurality of hole portions h. Through this hole portion h, the possibility that heat stays in the stator 1 can be reduced. As a result, it is possible to more stably operate the magnetic geared rotary electric machine 100.

(4) In the magnetic geared rotary electric machine 100 according to a fourth aspect, the anti-vibration member 90c includes the plurality of anti-vibration pieces P arranged at intervals in the direction of the axis Ac.

According to the above-described configuration, the anti-vibration member 90c is composed of the plurality of anti-vibration pieces P. A gap is formed between the anti-vibration pieces P. Through this gap, the possibility that heat stays in the stator 1 can be reduced. As a result, it is possible to more stably operate the magnetic geared rotary electric machine 100.

(5) In the magnetic geared rotary electric machine 100 according to a fifth aspect, the stator core 1A is provided with the plurality of cavities 8 which accommodate the stator magnet 1B, are arranged at intervals in the circumferential direction, and include the bottom surface 8A facing the radial inside as the inner surface of the stator core, and the anti-vibration member 91 is installed at least on the bottom surface 8A.

According to the above-described configuration, it is possible to absorb and attenuate the vibration generated in the stator 1 by the anti-vibration member 91. Further, it is possible to ensure a large clearance between the stator 1 and the first rotor 2 as compared with a case in which the anti-vibration member is provided between the stator 1 and the first rotor 2. As a result, it is possible to more stably operate the magnetic geared rotary electric machine 100.

(6) In the magnetic geared rotary electric machine 100 according to a sixth aspect, the anti-vibration member 92 is provided between the wall surface 2S of the slot S as the inner surface of the stator core and the coil.

According to the above-described configuration, since the anti-vibration member 92 is provided on the wall surface 2S of the slot S, it is possible to absorb and attenuate the vibration generated by the stator 1. Further, since the anti-vibration member 92 is firmly pressed against the wall surface 2S by the coil C, it is possible to reduce the possibility that the anti-vibration member 92 may fall off.

### Industrial Applicability

According to the present disclosure, it is possible to provide a magnetic geared rotary electric machine that suppresses a vibration.

### Reference Signs List

100 Magnetic geared rotary electric machine
1 Stator
1A Stator core
1B Stator magnet
1S Cylindrical inner peripheral surface
2 First rotor
21 Cylindrical portion
22 Support portion
2H First rotor body
2P Pole piece
3 Second rotor
3A Rotor core
3B Rotor magnet
4 Casing
5 Disk portion
5A Casing inner peripheral surface
6 Rotating shaft
B Bearing
B1 Outer bearing
B2 Inner bearing
71 Back yoke
72 Tooth body
73 Tooth top end portion
8 Cavity
8A Bottom surface
8B Side surface
90, 90b, 90c, 91, 92 Anti-vibration member
Ac Axis
C Coil
h Hole portion
P Anti-vibration piece
S Slot

## Claims

1. A magnetic geared rotary electric machine comprising:
a stator which includes a stator core formed in an annular shape centered on an axis, a coil installed inside a slot of the stator core, and a plurality of stator magnets installed inside the stator core at intervals in a circumferential direction about the axis;
a first rotor which includes a plurality of pole pieces provided inside the stator at intervals in the circumferential direction of the axis; and
a second rotor which includes a rotor core provided inside the first rotor and a plurality of rotor magnets provided in the rotor core at intervals in the circumferential direction,
wherein the stator further includes an anti-vibration member that is made of fiber-reinforced plastic and is installed on an inner surface of the stator core.

2. The magnetic geared rotary electric machine according to claim 1,
wherein the stator core includes a cylindrical inner peripheral surface which is defined by the plurality of stator magnets as the inner surface of the stator core, and
wherein the anti-vibration member is placed on the cylindrical inner peripheral surface.

3. The magnetic geared rotary electric machine according to claim 2,
wherein the anti-vibration member is provided with a plurality of hole portions penetrating the anti-vibration member in a radial direction with respect to the axis.

4. The magnetic geared rotary electric machine according to claim 1,
wherein the anti-vibration member includes a plurality of anti-vibration pieces which are arranged at intervals in a direction of the axis.

5. The magnetic geared rotary electric machine according to any one of claims 1 to 4,
wherein the stator core is provided with a plurality of cavities which accommodate the stator magnets, are arranged at intervals in the circumferential direction, and include a bottom surface facing a radial inside as the inner surface of the stator core, and
wherein the anti-vibration member is installed at least on the bottom surface.

6. The magnetic geared rotary electric machine according to any one of claims 1 to 5,
wherein the anti-vibration member is provided between a wall surface of the slot as the inner surface of the stator core and the coil.
